**Europäisches Patentamt**

**European Patent Office**

**Office européen des brevets**

(11) Veröffentlichungsnummer: **0 250 895**
**A2**

## (12) EUROPÄISCHE PATENTANMELDUNG

(21) Anmeldenummer: **87107938.0**

(22) Anmeldetag: **02.06.87**

(51) Int. Cl.⁴: **B01D 29/06** , B01D 39/18 , D21F 11/14

(30) Priorität: **03.07.86 DE 3622356**

(43) Veröffentlichungstag der Anmeldung:
**07.01.88 Patentblatt 88/01**

(84) Benannte Vertragsstaaten:
**DE FR GB IT SE**

(71) Anmelder: **Drägerwerk Aktiengesellschaft**
**Moislinger Allee 53-55**
**D-2400 Lübeck 1(DE)**

(72) Erfinder: **Schlör, Georg, Dipl.-Ing.**
**Weiter Lohberg 5**
**D-2400 Lübeck(DE)**
Erfinder: **Pantaleon-Stemberg, Gerd**
**Fichtestrasse 6**
**D-2410 Mölln(DE)**

(54) Verfahren zur Herstellung eines mehrere Falten aufweisenden Filters und Werkzeug hierzu.

(57) Ein Verfahren zur Herstellung eines mehrere Falten aufweisenden Filters aus einer wässrigen Fasermischung, welche auf einem porösen Formstück aufgebracht wird und bei dem unter Druckeinwirkung auf das Formstück ein papierartiges Filterhaufwerk erzeugt wird, soll ohne mechanische Umformung des Rohformlings ausgeführt werden. Dies wird erfindungsgemäß dadurch erreicht, daß die wässrige Fasermischung auf das in der Filterkontur vorliegende poröse Formstück (4) aus voneinander getrennten Füllräumen (12,13, 14) abgelagert und das Filter aus benachbarten Faltabschnitten - schichtförmig auf dem Formstück (4) durch getrenntes Zuführen der Fasermischung zu den miteinander verbundenen Faltabschnitten aufgebaut wird (Fig.).

EP 0 250 895 A2

## Verfahren zur Herstellung eines mehrere Falten aufweisenden Filters und Werkzeug hierzu

Die Erfindung betrifft ein Verfahren zur Herstellung eines mehrere Falten aufweisenden Filters aus einer wässrigen Fasermischung, welche auf einem porösen Formstück einseitig aufgebracht wird und bei dem unter Druckeinwirkung auf das Formstück ein papierartiges Filterhaufwerk erzeugt wird. Es werden ferner Vorrichtungsmerkmale eines Werkzeugs zur vorzugsweisen Durchführung des Verfahrens angegeben.

Die Herstellung von Filtern, z.B. als Schwebstofffilter in Atemschutzfiltern, erfolgt nach der DE-PS 727 678 nahtlos aus einem kegelstumpfförmigen porösen Zwischenprodukt, welches entsprechend der gewünschten Anzahl und Form der konzentrischen Falten auf einen Formkörper aufgestülpt wird. Während des Faltvorganges wird das Filtergewebe stark gewalkt und unter Umständen so weit vorgeschädigt, daß eine Rißbildung eintritt. Außerdem stören die beim Faltvorgang entstehenden Dickenunterschiede in verschiedenen Faltbereichen des Filters.

Aus der DD-PS 79 ist ein Ringfilter bekannt, welches aus Faserstoffbrei in seiner endgültigen Form gegossen wird. Das gleichmäßige Herstellen einer einstückigen Gußausführung erscheint - schwierig.

Die Erfindung geht von der Aufgabenstellung aus, ein Verfahren der eingangs beschriebenen Art so auszubilden, daß die Herstellung von fehlerfreien Filtern in definierten Wandstörkebereichen ohne Faltvorgang in beliebiger Geometrie des Filters möglich ist.

Zur Lösung dieser Aufgabenstellung ist vorgesehen, daß die wässrige Fasermischung auf das in der Filterkontur vorliegende poröse Formstück aus voneinander getrennten Füllräumen abgelagert und das Filter aus benachbarten Faltabschnitten - schichtförmig auf dem Formstück durch getrenntes Zuführen der Fasermischung zu den miteinander verbundenen Faltabschnitten aufgebaut wird.

Ein solches Herstellungsverfahren bietet den Vorteil, daß das Filter in situ in seine endgültige Form gebracht wird, und daß die durch mechanisches Umformen eines Rohformstücks auftretenden zusätzlichen Beanspruchungen wegfallen. Die abschnittsweise Zusammensetzung vermeidet außerdem die Nachteile der einstückigen Gußausführung. Jede Falte des Filters kann bei Bedarf mit Fasermischung individuell versorgt werden, und es lassen sich gegebenenfalls mehrere Falten zu einem gleichzeitig beschickten, aus mehreren benachbarten Faltabschnitten bestehenden, Teilstück zusammenfassen.

Die Schichtdicke des Filters kann zweckmäßig durch wiederholtes Pumpen der Fasermischung in die Füllräume und damit durch schichtförmiges Aufbringen festgelegt werden. Dabei sind auch unterschiedliche Schichtdicken in den einzelnen Faltabschnitten möglich.

Ein vorteilhaftes Werkzeug zur Herstellung eines mehrere Falten aufweisenden Filters kann derart aufgebaut sein, daß in einem geteilten Formkörper im Bereich der Trennebene ein poröses Formstück in Gestalt des herzustellenden Filters eingelegt und einseitig mit einem Absaugraum verbunden ist, wobei auf der anderen Seite des Formstücks Stützkörper jeweils bis zum Eingriff in den Faltengrund des herzustellenden Filters vorge sehen sind und sich in den Räumen zwischen den Stützkörpern bzw. zwischen einem Stützkörper und einem Wandteil des Formkörpers bewegbare Pumpenelemente befinden. Als poröser Formteil wird dabei zweckmäßig ein Formstück aus Metall oder Kunststoff verwendet, welches eine Vielzahl von Ausnehmungen im Zehntelmillimeterbereich derart aufweist, daß ein gleichmäßiges Abscheiden der Fasern aus der Fasermischung über den gesamten Querschnitt gewährleistet ist. Über die Ausnehmungen strömt das sich bei der Abscheidung von den Fasern trennende Wasser in den Absaugraum ein. Das Filter baut sich abschnittsweise auf der Oberfläche des Formstücks bis zur Anlage an den Endflächen der Stützkörper bzw. der in ihrem Vorschubweg in der Endlage anliegenden Pumpenelemente auf. Die Endflächen der Pumpenelemente sind entsprechend der gewünschten Faltenform im Faltenfirst zu wählen. Dies gilt in gleicher Weise auch für die im Faltengrund eingreifenden Endflächen der Stützkörper.

Ein weiterer Vorteil kann gegebenenfalls dadurch erreicht werden, daß die Pumpenelemente mit getrennten Antriebselementen verbunden und in ihrer Förderleistung getrennt steuerbar sind. Dadurch lassen sich verschiedene Wandstärken in unterschiedlichen Faltabschnitten herstellen.

Durch die Merkmale der Erfindung wird eine gleichmäßige Herstellung von Filtern ohne mechanische Faltung und ohne einstückige Gußausführung möglich. Dabei können die verschiedensten Filtergeometrien und Filtergrößen hergestellt werden. Neben linear orientierten Filterformen mit parallelen Falten sind auch konzentrische Anordnungen mit kreisförmigen oder von der Kreisform abweichenden Falten in Oval-oder Polygonform möglich. Die Filter können ferner verstärkte Falten und/oder Zwischenabschnitte bzw. Falten veränderlicher Breite aufweisen. Im gleichen Arbeitsgang läßt sich an das Filter auch ein Einspann-bzw. Verstärkungsrahmen anformen. Eine andere mögliche Ausführungsform dann in topfförmigen, kegelstumpf-oder pyramidenstumpfförmigen, ebenflächigen bzw. mit zusätzlichen Knickfalten versehenen Filterformen liegen. Die einzelnen Filterabschnitte lassen sich aus unterschiedlichem Fasermaterial aufbauen.

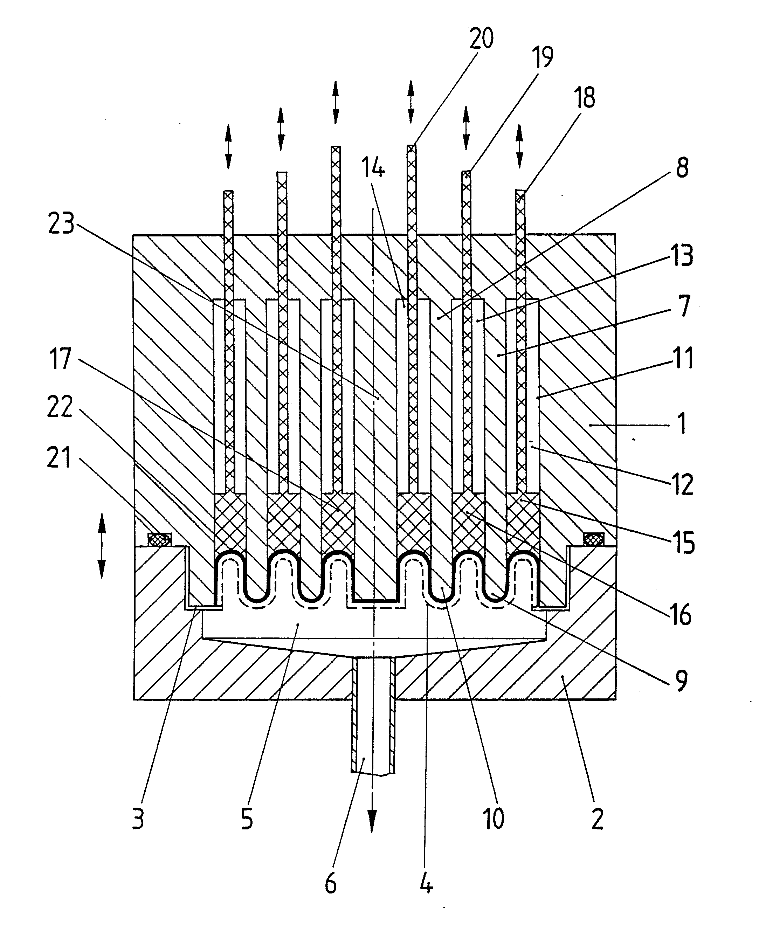

In der Zeichnung ist ein Werkzeug gemäß einer Weiterbildung der Erfindung schematisch dargestellt.

In einem aus einem oberen und einem unteren Werkzeugteil 1,2 zusammengesetzten Formkörper ist im Bereich der Trennebene 3 ein poröses metallenes Formstück 4 in der endgültigen Gestalt des herzustellenden Filters eingespannt. Dieses Formstück 4 steht einseitig mit einem im unteren Werkzeugteil 2 ausgebildeten Absaugraum 5 in Verbindung. Der Absaugraum 5 dient zum Abführen von aus der Fasermischung durch das Formstück 4 austretendem Wasser und kann über eine Anschlußleitung 6 mit einer in der Zeichnung nicht dargestellten Pumpvorrichtung zur Unterdruckerzeugung verbunden werden.

Im oberen Werkzeugteil 1 sind zwei konzentrische ringzylinderförmige Stützkörper 7,8 angeordnet, die in ihren Endflächen 9,10 der Form der Ringfalten im Faltengrund angepaßt sind. Die konzentrischen Stützkörper 7,8 begrenzen gegenüber einem Mittelteil 23 und einer Innenwandfläche 11 des oberen Werkzeugteils 1 drei ringförmige Füllräume 12,13,14, in denen jeweils kreisringförmige Pumpenelemente 15,16,17 verschiebbar gelagert und über Verschiebestangen 18,19,20 mit in der Zeichnung nicht dargestellten Antriebselementen, beispielsweise in Form von Hydraulikzylindern, verbunden sind.

Zur Abdichtung zwischen dem oberen Werkzeugteil 1 und dem unteren Werkzeugteil 2 ist eine Ringdichtung 21 vorgesehen.

Beim Herstellungsvorgang des Filters wird der obere Werkzeugteil 1 vom unteren Werkzeugteil 2 abgehoben und in einen Vorrat der wässrigen Fasermischung eingetaucht. Danach bewegen sich die Pumpenelemente 15,16,17 durch die zugeordneten Antriebselemente nach oben, und es wird Fasermischung in die einzelnen Füllräume 12,13,14 eingesaugt.

Nun kann der obere Werkzeugteil 1 auf den unteren Werkzeugteil 2 abgesetzt und die Absaugung aus dem Absaug raum 5 vorgenommen werden. Gleichzeitig erfolgt ein Vorschub der Pumpenelemente 15,16,17 bis zum Endanschlag, und dabei wird das Filter 22 aus benachbarten Faltabschniten schichtförmig auf dem Formstück 4 aufgebaut. Gegebenenfalls kann dieser Herstellungsvorgang bis zur Abnahme des fertigen Filters ein- oder mehrfach wiederholt werden.

Da die Pumpenelemente 15,16,17 einzeln justierbar und in ihrem Bewegungsvorgang einzeln ansteuerbar sind, läßt sich jeder Falte eine individuelle Menge an Faserstoff zuführen und damit eine entsprechende Wanddickenverteilung erreichen. Die Faserstoffmenge wird durch den Hub der Pumpenelemente gesteuert.

Nach dem Pumpvorgang liegt das Filter in seiner endgültigen Form vor und kann zum Endformen mit Hilfe von Unterdruck, der von der Abströmseite her aufgebracht wird, nachgetrocknet werden. Dazu fährt der obere Werkzeugteil 1 aus dem unteren Werkzeugteil 2 heraus. Das Ringfaltenfilter kann dann entnommen werden. Während des Trockensaugens bei abgenommenem oberen Werkzeugteil 1 können die Füllräume 12,13,14 dieses Werkzeugteils erneut durch Eintauchen und Ansaugen mit wässriger Fasermischung gefüllt werden.

## Ansprüche

1. Verfahren zur Herstellung eines mehrere Falten aufweisenden Filters aus einer wässrigen Fasermischung, welche auf einem porösen Formstück einseitig aufgebracht wird und bei dem unter Druckeinwirkung auf das Formstück ein papierartiges Filterhaufwerk erzeugt wird, **dadurch gekennzeichnet,** daß die wässrige Fasermischung auf das in der Filterkontur vorliegende poröse Formstück aus voneinander getrennten Füllräumen abgelagert und das Filter aus benachbarten Faltabschnitten schichtförmig auf dem Formstück durch getrenntes Zuführen der Fasermischung zu den miteinander verbundenen Faltabschnitten aufgebaut wird.

2. Verfahren nach Anspruch 1, **dadurch gekennzeichnet,** daß das Filter durch wiederholtes Pumpen der Fasermischung in die Füllräume erzeugt wird.

3. Werkzeug zur Herstellung eines mehrere Falten aufweisenden Filters, insbesondere zur Durchführung des Verfahrens nach Anspruch 1, **dadurch gekennzeichnet,** daß in einem geteilten Formkörper (1,2) im Bereich der Trennebene (3) ein poröses Formstück (4) in Gestalt des herzustellenden Filters (22) eingelegt und einseitig mit einem Absaugraum (5) verbunden ist, daß auf der anderen Seite des Formstücks (4) Stützkörper (7,8) jeweils bis zum Eingriff in den Faltengrund des herzustellenden Filters (22) vorgesehen sind, und daß sich in den Räumen zwischen den Stützkörpern (7,8) bzw. zwischen einem Stützkörper und einem Wandteil des Formkörpers (1) bewegbare Pumpenelemente (15,16,17) befinden.

4. Werkzeug nach Anspruch 3, **dadurch gekennzeichnet,** daß die Pumpenelemente (15,16,17) mit getrennten Bewegungsantrieben verbunden und in ihrer Förderleistung getrennt steuerbar sind.

5. Werkzeug nach Anspruch 3, **dadurch gekennzeichnet,** daß die Stärke der Pumpenelemente (15,16,17) der herzustellenden Faltenteilung entspricht.

6. Werkzeug nach Anspruch 3, **dadurch gekennzeichnet,** daß der Abstand zwischen der Oberfläche des porösen Formstücks (4) und den Endflächen der Stützkörper (7,8) der Dicke des herzustellenden Filters (22) im Faltengrung entspricht.

7. Werkzeug nach Anspruch 3, **dadurch gekennzeichnet,** daß der Abstand zwischen den Endflächen der in Endlage vorgeschobenen Pumpenelemente (15,16,17) und der Oberfläche des porösen Formstücks (4) der Dicke des herzustellenden Filters (22) im Faltenfirst entspricht.

8. Werkzeug nach Anspruch 3, **dadurch gekennzeichnet,** daß die Stützkörper (7,8) und die Pumpenelemente (15,16,17) konzentrisch angeordnete Ringteile sind.

0 250 895